# EUROPEAN PATENT APPLICATION

(11) **EP 2 455 500 A1**
(43) Date of publication of application: **23.05.2012**
(21) Application number: 10192065.0
(22) Date of filing: 22.11.2010
(51) Int. Cl.: C22B 3/44, C22B 7/00, C22B 3/12, C22B 13/00

(54) **Process of treating end-of-life cathode ray tubes for lead and soluble silicates recovery**

(71) Applicant: Costech International S.p.A., 20096 Pioltello (IT)
(72) Inventor: Modica, Giovanni, 20157 Milano (IT)
(74) Representative: Palladino, Saverio Massimo

(57) **Abstract**

There is described a process of recycling screen glass resulting from the disposal of cathode tube televisions, with quantitative recovery of lead in the form of sulphide and of silicates of cations other than lead, and subsequently recycling all the materials so recovered. The process comprises an alkaline leaching or etching step with a strong alkaline solution (NaOH or KOH) followed by lead precipitation in the form of lead sulphide.

## Description

### Field of the invention

The present invention relates to a process of recovering lead contained in the glass of the cones resulting from the disposal of cathode ray tube television sets, and to the conversion of the remaining glass of the screens into soluble silicates.

### State of the art

The acknowledgement of the regulations on RAEE by the EU Member States set up a virtuous circuit of recovering materials from end-of-life, electric/electronic devices.

In the specific case of cathode ray tube television sets, specialized companies dispose of them by recovering and starting up the recycling of plastic materials, wood-based materials, electronic circuits and, with particular regard to the cathode ray tube (CRT), barium/strontium glass and lead glass, which normally form the screen and the cone tube, respectively; in certain cases, the screen glass also contains lead, even if to a lesser extent.

On the internal face of the screen, the so-called 'phosphors' - a complex mix of metal compounds which brighten up and form the image when hit by the cathode rays - are deposited. The glass screen is cleared from phosphors before starting the recycling process thereof. On the other hand, no recovery treatment is performed on phosphors and this is also because of their low percentage, despite these being a material from which valuable metals belonging to rare earths could be recovered.

The part of cathode tube containing lead may be divided into two components: the cone, made of a glass with a 20% minimum lead oxide content, intended to prevent the cathode rays from escaping from inside the tube; and a high-lead content (up to 50%) and low melting point frit, which is used to connect the screen to the cone.

On the lead glass, the operations carried out by specialized companies before dispatching it to the discharge, essentially consist in removing the coatings deposited on the glass in order to suppress the release of toxic-noxious substances.

In a mid-sized television set, the average weight of the cathode tube is about 15 kg; considering that the barium glass/lead glass weight ratio is about 2/1, from each disposed television about 1 kg lead and about 9 kg water glass could be theoretically recovered. In large-sized television sets, lead glass weight may even reach 10 kg, thus doubling the above-mentioned recovery values.

In the United Kingdom, Nulife Glass Ltd. recovers metal lead from CRTs glass by means of a pyrometallurgical process, claiming a 95% recovery of the lead present in the glass. This process is however environmentally and energetically burdensome, as the lead recovery is performed by heating the mass at a temperature higher than 1000 °C and adding coal as a reducer; in this process, lead vapors which have to be cut down to avoid environmental contamination are inevitably released.

The article "A novel process utilizing subcritical water to remove lead from wasted lead silicate glass", to H. Miyoshi et al., Chemistry Letters, Vol. 33 (2004), N. 8, p. 956, discloses a hydrothermal treatment with water under subcritical conditions (355 °C e 24 MPa) to remove lead from a glass with the following composition (in molar percentages): 7.3 Na₂O - 6.4 K₂O - 3.7 MgO - 5.4 CaO - 66.4 SiO₂ - 7.8 PbO - 3 Al₂O₃. An acid treatment at 100 °C to turn silicate into silica and recover a soluble lead salt follows.

The article "Development of an eco-friendly material recycling process for spent lead glass using a mechanochemical process and Na2EDTA reagent", to Ryo Sasai et al., Environ. Sci. Technol., Vol. 42 (2008), N. 11, pp. 4159-4164, discloses a mechanical-chemical treatment based on a mechanical milling action, and a chemical one by means of strong complexants.

The article "Lead extraction from waste funnel cathode-ray tubes glasses by reaction with silicon carbide and titanium nitride", to P. G. Yot et al., Journal of hazardous Materials, Vol. 172 (2009), N. 1, pp. 117-123, discloses a process based on a reduction treatment performed with silicon carbide and titanium nitride.

The known processes are still to a level of laboratory studies, far away from an industrial application, and the only industrialized technology for the treatment of lead glass from CRTs (Nulife Glass Ltd.) proves to be highly energy demanding and does not achieve a total lead recovery.

### Summary of the invention

The object of the present invention is to provide a process which allows to totally recover lead, in the form of sulphide, from glasses containing the element, and the remaining part of the compounds present in the glass in the form of a mixture of water-soluble silicates.

These objects are achieved according to the present invention by a process which comprises the following operations:
- etching the glass by means of a strongly alkaline compound, thus obtaining an aqueous-based liquid phase;
- adding a sulphide to the so obtained liquid phase, with the precipitation of lead sulphide;
- separating the solid lead sulphide from the above liquid phase.

### Detailed description of the invention

The first operation of the process of the invention consists in the initial treatment of the lead glass with a strong alkali. This treatment may be carried out with various methods.

According to a first possible method, the glass is directly treated with an aqueous alkali solution, typically a hydroxide of an alkali metal, preferably of sodium, NaOH, or potassium, KOH. If an aqueous alkali solution is used, the minimum temperature at which the glass dissolution phenomenon becomes industrially useful is higher than 100 °C, whereby an autoclave operation at autogenic pressure generated according to the temperature is required. Glass dissolution has an acceptable rate at values of about 150 °C, and it becomes quite fast at a temperature of 180 °C. The glass is etched and dissolved by alkali, thus leading to the formation of a clear solution. This solution is processed (e.g. by filtration) to remove any non-reacted glass residues, which are recycled to alkali treatment. As this is a solid-liquid reaction, it is expedient to increase the etching surface by finely grinding the glass in order to facilitate the glass breaking-up treatment. The glass grinding extent does not affect the breaking-up action of the solution but only the time at which it occurs.

Alternatively, the first glass etching may be thermo-chemically performed, by mixing the glass (preferably ground) with alkali in a solid form, and by heating the so obtained solid mixture at a temperature higher than the melting temperature of the alkali employed (e.g. 323 °C when NaOH is used or 360 °C when KOH is used). Once the mixture has been melted, the mass is taken again with water, thus obtaining a very fluid, viscous mass.

The lead glass/alkaline compound weight ratio may be between 1/0.6 and 1/1.4 and preferably between 1/0.8 and 1/1.2. If glass dissolution by alkali etching in aqueous phase is used, the alkali will be used in the form of aqueous solutions with a concentration between 10 and 50% by weight, preferably between 15 and 45%.

The second operation of the process of the invention consists in adding a sulphide to the liquid phase obtained in the previous operation, with lead sulphide precipitation.

The sulphide may be added to the liquid phase in the form of a soluble compound, e.g. sodium sulphide (solid or, in its turn, in the form of concentrated solution); alternatively, in the liquid phase, hydrogen sulphide, H₂S, may be bubbled in gaseous form. If sulphide from soluble compound is added, the amount of the latter will be simply calculated by knowing the weight of the processed glass and the lead concentration thereof (from which weight and thus moles of lead are obtained); with similar calculations, within reach of a person of ordinary skill in the art, the volume of H₂S to be bubbled through the liquid phase may be calculated.

In both cases, the selective precipitation of lead in the form of sulphide is achieved. The lead precipitation is quantitative, because this sulphide is practically insoluble, this salt having a solubility product of 10⁻²⁹; on the other hand, sodium silicate and other silicates of the cations present in the glass, as well as the possible excess of alkali employed, remain in solution.

In the third and last operation of the method, the lead sulphide is separated by means of filtration, centrifugation or other known method, thus recovering a clear sodium silicate solution (if the alkali used was sodium hydroxide), the concentration of which depends on the amount of water used in treating the mass.

The lead sulphide may be usefully converted into metal lead by means of treatments well known by those skilled in the art, and compared to the traditional galena extracted from the mineral, it shows a clearly higher sulphide concentration.

The silicate solution, before recycling, may be subjected to a chemical analysis to detect the presence of a residue of lead or sulphide ions, which may result from an imperfect calculation of the amounts of reactants to be used (e.g. due to the fact that this calculation was made on the basis of the nominal lead concentration in the glass, and that the real lead content was less or more than the nominal one). If from the solution analysis, the presence of lead or sulphide ions is detected, in the first case, the lead precipitation may be completed by adding further sulphide (in the form of soluble salt or H₂S, as previously described); in the second case, excess sulphide ions may be removed by adding to the solution a strong oxidizer (typically a peroxide), which oxidizes sulphides to sulphates, thus generating substances accepted in the composition of commercial silicates. The recovered alkali silicate is very pure as it is lead free, and it also contains the cations present in the original lead glass, such as calcium, barium, potassium or aluminum, which in alkaline solution do not form insoluble sulphides and therefore do not precipitate along with lead sulphide; this product may be used in many fields, among which construction, ceramics and paint industries may be listed.

The invention will be further disclosed by means of the following examples.

### EXAMPLE 1

A 560 kg mass of lead glass is ground until obtaining a solid product having a mean grain-size of 1 mm. On a sample of the so obtained granulate, a chemical analysis is performed, from which the glass is determined to have average composition, expressed in weight percentage values: 7.9 Na₂O - 7.6 K₂O - 3.1 CaO - 1.6 MgO - 1.4 BaO - 51.4 SiO₂ - 4.3 Al₂O₃ - 0.1 Fe₂O₃ - 22.6 PbO. The ground glass is put into an autoclave along with 560 kg of 99% pure solid sodium hydroxide, and 850 litres of water. The mass is heated at 180 °C and stirred for 3 hours. The autogenic pressure recorded is 8 bars. At the end of the reaction, the mass is cooled and filtered by separating a non-dissolved mass equal to 3% of the original one. Such a mass is recycled at a subsequent solubilisation treatment. The clear solution is processed with H₂S, thus obtaining the precipitation of a solid which, after drying, is of 134.5 kg, and which from the analysis is identified as lead sulphide of purity 99% by weight, which corresponds to a practically quantitative recovery of the lead originally contained in the glass, considering 3% of initial, non-dissolved mass and non perfectly homogeneous dissolution phenomena of the starting glass, which lead to a slight enrichment of lead content in the solution as compared to the starting mean composition.

The separated clear solution consists of a mixture of sodium, potassium, calcium, magnesium, aluminum and barium silicates, and it is stable over time without causing, even to a minimum extent, the formation of precipitates or gelatinous masses.

### EXAMPLE 2

The procedure of example 1 is repeated, with the only differences that the autoclave temperature during glass dissolution is kept at 200 °C, and that this operation lasts 1,5 hours. The results obtained are similar to those described in example 1.

### EXAMPLE 3

The procedure of example 1 is repeated, with the only differences that the initial glass has been ground to a mean grain-size of 0.2 mm, the autoclave temperature during glass dissolution is kept at 190 °C, and that this operation lasts 1 hour. The results obtained are similar to those described in example 1.

### EXAMPLE 4

A 500 kg mass of the same glass as example 1 is ground until obtaining a solid product having a mean grain-size of 3 mm. The ground glass is put into a crucible along with 450 kg of 99% solid sodium hydroxide. The mass is heated at 480 °C and stirred for 1 hour. At the end of the reaction, the melt mass is cooled, ground and processed with 900 litres of water. The mass is filtered and the separated solid residue is 3% of the initial mass. Such a residue is recycled to the initial treatment, while the liquid phase is processed with hydrogen sulphide, thus obtaining the precipitation of a solid which, after drying, is 118.5 kg which, by means of the analysis is identified as lead sulphide of purity 99.2% by weight; this amount of solid corresponds to a practically quantitative recovery of the lead in the original glass. The separated, clear solution consists of a mixture of sodium, potassium, calcium, magnesium, aluminum and barium silicates, and it remains stable over time without causing, even to a minimum extent, the formation of precipitates or gelatinous masses.

With respect to the currently employed methods of treating lead glasses from CRTs disposal, the process of the invention provides undoubted operational advantages as well as advantages in energy consumption, and in toxic and noxious emissions.

First, the process has glass dissolution temperatures which are at most 200 °C for the treatment in aqueous phase, and 550 °C in case of alkali fusion treatment.

Second, the process of the invention shows a high operational flexibility, which complies very well with the treatment of glass wreckage from end-of-life CRTs disposal, in which the material composition may normally fluctuate within relatively wide limits resulting both from the type of lead glass originally used by the manufactures and from the adopted disposal system which might not be capable of efficiently separating the screen glass from the cone glass.

## Claims

1. A process of recovering lead and silicates from glasses resulting from cathode tube screen disposal, which comprises the following operations:
- etching the glass by means of a strongly alkaline compound, thus obtaining an aqueous-based liquid phase;
- adding a sulphide to the so obtained liquid phase, with the precipitation of lead sulphide;
- separating the solid lead sulphide from the above liquid phase.

2. A process according to claim 1, wherein said alkaline compound is an alkali metal hydroxide.

3. A process according to claim 2, wherein said compound is chosen from sodium hydroxide and potassium hydroxide.

4. Process according to any one of the preceding claims, wherein said glass etching operation is conducted by means of an aqueous solution of the alkaline compound at a temperature not higher than 200 °C.

5. A process according to claim 4, wherein the process temperature is higher than 100 °C.

6. A process according to claim 5, wherein the process temperature is between 150 °C and 180 °C.

7. A process according to any one of the claims from 4 to 6, wherein the alkaline compound is employed in the form of an aqueous solution with a weight concentration between 10 and 50%.

8. A process according to claim 7, wherein said concentration is between 15 and 45%.

9. A process according to any one of the claims from 1 to 3, wherein said glass etching operation is conducted by blending the glass with the alkaline compound in solid form, heating the so obtained solid mixture at a temperature higher than the melting temperature of the alkaline compound employed, and taking again the resulting molten mass with water.

10. A process according to any one of the preceding claims, wherein in said glass etching operation, the lead glass/alkaline compound weight ratio is between 1/0.6 and 1/1.4.

11. A process according to claim 10, wherein said weight ratio is between 1/0.8 and 1/1.2.

12. A process according to any one of the preceding claims, wherein the glass is ground before said etching operation by the alkaline compound.

13. A process according to any one of the preceding claims, wherein said operation of adding a sulphide to the liquid phase is conducted by adding a water-soluble sulphide to said liquid phase, or by bubbling hydrogen sulphide therein.

14. A process according to any one of the preceding claims, wherein said operation of separating solid lead sulphide from the liquid phase is conducted by filtration or centrifugation.

15. A process according to any one of the preceding claims, wherein after said operation of sulphide separation, a chemical analysis on said liquid phase is performed, and:
- if, in the analysis, the presence of lead ions in the liquid phase is detected, a sulphide is added thereto in the form of a water-soluble salt, or by bubbling hydrogen sulphide therein;
- if, in the analysis, the presence of sulphide ions in the liquid phase is detected, an effective oxidant for the oxidation of sulphide ion to sulphate ion is added thereto.
